# EUROPEAN PATENT APPLICATION

(11) **EP 0 813 133 A2**
(43) Date of publication of application: **17.12.1997**
(21) Application number: 97303445.7
(22) Date of filing: 20.05.1997
(51) Int. Cl.: G06F 1/00

(54) **A uniform mechanism for using signed content**

(30) Priority: 11.06.1996 US 661687
(71) Applicant: International Business Machines Corporation, Armonk, N.Y. 10504 (US)
(72) Inventor: Anand, Rangachari, Palisades Park, New Jersey 07650 (US); Islam, Nayeem, Yorktown Heights, New York 10598 (US); Rao, Josyula Ramachandra, Briarcliff Manor, New York 10510 (US)
(74) Representative: Waldner, Philip

(57) **Abstract**

A scheme for downloading signed content onto a machine by a delivery mechanism (such as floppy diskettes and the Internet) is described. While there are no restrictions on the nature of the contents, the signature on the content describes the security credentials of the creator, the resource requirements, and licensing information (such as the time period of its validity). Once the content has been downloaded, it can be used on the client machine in various ways. It can be installed on the client machine and there after users can execute it. Any use of the content of the
content requires access to computing resources on the client machine. This access is mediated by means of a security manager that uses the information in the content's signature to manufacture capabilities that grant and regulate access to different subsets of the computing resources. In this sense, our scheme unifies work done in the previously disparate fields of network security and operating systems and results in data structures and algorithms that combine and manipulate elements of both.

## Description

The present invention relates to a uniform mechanism for using signed content in particular in computer security mechanisms for safely executing software which has been obtained over a network or by other means from an untrusted source.

In order to increase the utility of networked computers, methods have been sought to allow them to execute programs obtained from servers. The primary advantage of such a system from the user's view point is that it decreases the amount of software that must be stored on the user computer. From the software developers viewpoint, the system has a number of advantages, the main one being that the application provider has greater control over the distribution of the programs. The use of embedded Java applets (i.e. programs) in World Wide Web documents is a popular example of such a system.

A significant concern with this approach, is that the software which obtained from the server may be malicious and damage the user's computer or steal data. The downloaded software must therefore be executed in a controlled environment in which they are given only the system resources that they need and no more. The main problem with the current Java applet security mechanism is that it is not flexible enough. All Java applets are considered hostile and are not allowed to access most resources on the user machine's operating system.

There are variety of standard techniques for public cryptography and authentication. RSA is an example of a widely used public key cryptography algorithm. Examples, of implementations include RSAref and PGP.

Mechanisms also exist to create digital signatures for messages. These link persons with the contents of messages. They can also be used to create digital signatures for messages such that the creator of the message can not disavow the message. The MD5 algorithm in conjunction with RSA is an example of a signature system.

A number of computer operating system use capabilities to control access to system resources. A capability is a permission held by a process to perform some action on another object. Notable operating systems that use capabilities for enforcing security are Amoeba and Mach.

In accordance with a first aspect of the present invention, a secure content usage system and method for use in a computing system is provided. The system includes a content importation mechanism; an extractor, operatively connected to receive signed content imported by way of the importation mechanism, for extracting portions of a signature from the signed content, the portions including a security credentials associated with the content; resource requirements for using the content; an analysis module for verifying authenticity and integrity of the signed content using at least the security credentials supplied by the extractor and taking remedial actions when any of the authenticity and the integrity are in doubt; and, an enforcement module for ensuring that use of the signed content conforms to the resource requirements and security credentials.

In accordance with a second aspect of the present invention, there is provided a computer readable memory having signed content instantiated thereon. The signed content includes a computer readable signature and computer readable content, the computer readable signature including a plurality of fields comprising a security credentials field including cryptographic identifies of at least an originator and intermediaries involved in a chain of distribution of the computer readable content and a resource requirements field identifying computing resources required for using the computer readable content.

In accordance with a third aspect of the present invention, a content usage system and method for enforcing licensing terms in a computing system is provided. The system includes a content importation mechanism; an extractor, operatively connected to receive signed content imported by way of the importation mechanism, for extracting portions of a signature from the signed content, the portions including a computer readable licensing terms associated with the content; and, an enforcement module for controlling operation of the computing system so as to ensure that use of the signed content conforms to the licensing terms.
Figure 1 is an abstract view of a content delivery mechanism according to the principles of the present invention;
Figure 2 shows sources and intermediaries in a content delivery system;
Figure 3 shows how the manufacturer/author and intermediaries add their signatures to the content being delivered in accordance with an embodiment of the present invention;
Figure 4 shows the modules involved in processing the signed content in the user machine according to an embodiment of the present invention;
Figure 5 shows the Access Information table used by the Enforcer module of Figure 4;
Figure 6 depicts the relationship between the capabilities of the various entities in the secure content usage system of Figure 4;
Figure 7 shows the relationship between the privileges given to different users for the signed content in the system of Figure 4;
Figure 8 shows an embodiment of the present invention when the signed content is a Java applet;
Figure 9 shows the actions taken by secure content usage system of Figure 4 upon receipt of signed content; and,
Figure 10. shows the method by which security is enforced by the Enforcement module of Figure 4.

### Detailed Description of the Preferred Embodiment

The embodiments of this invention will now be described in detail with reference to the drawings.

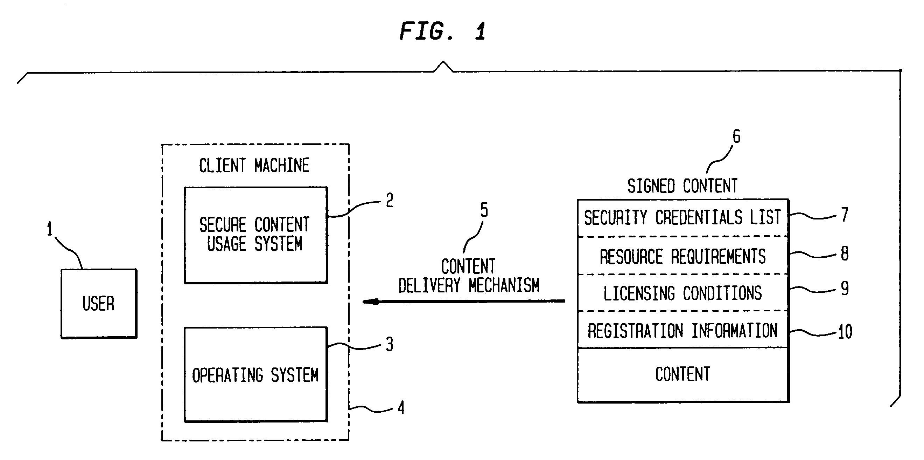

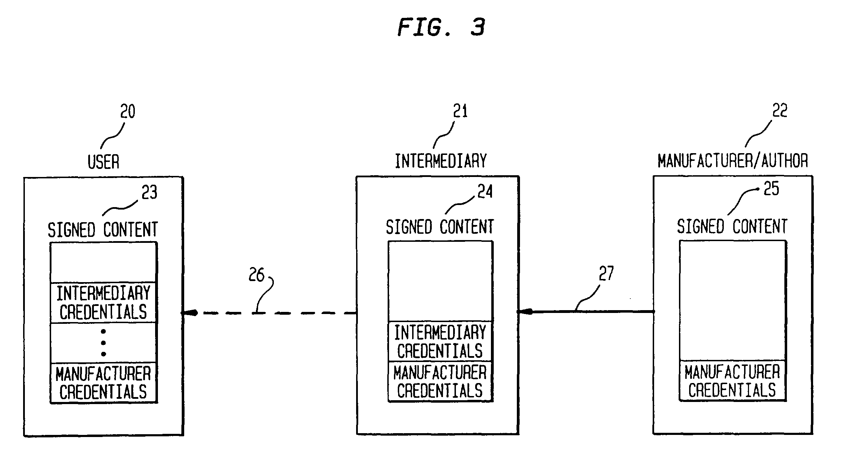

Figure 1 gives an abstract description of the invention. A user 1, uses a client machine 4 and uses a content delivery mechanism 5 to transfer signed content 6 to his/her machine. Examples of delivery mechanisms include floppy diskettes, CD-ROMS and the Internet. Examples of executable content include Java applets, OLE components and SOM components. The content has a signature. Other types of content could include text, audio and video. The signature includes four fields. The first field 7 is a list of the security credentials of the software. This is described in further detail in Figure 3. Examples of security credentials include the identities of the author and the manufacturer. The credentials guarantee that the content was created and distributed by the principals whose credentials occur on the list. In addition, they provide a means to check that the content has not been altered after it was signed. Further, they provide a means of ensuring that the author cannot disavow the content that he/she has created. The second field 8 describes the computing resources 3 that the content needs on the client machine. These resources are needed for the content to achieve its purpose on the client machine. Examples of purpose include installing and executing the signed content. Examples of computing resources include disk space, file space, file access, RAM, CPU, networking capabilities and the user display.

Once the signed content is downloaded to the user's machine, the user can use the content in various ways. Examples of use of the content include installing it, viewing it and executing it. The content is used in a carefully controlled environment 2 on the client machine. This use of the signed content may require access to computing resources on the client machine. The resources required for using the signed content 8 are part of the signature of the content. Access to such resources is mediated by means of a secure content usage system 2.

The third field (this is optional) provides licensing information 9. Examples of licensing information include terms and conditions for use such as the number of machines and the time period for which the content can be used. The fourth field (this is optional) is the registration information 10. This information is used to automatically register the content with the provider.

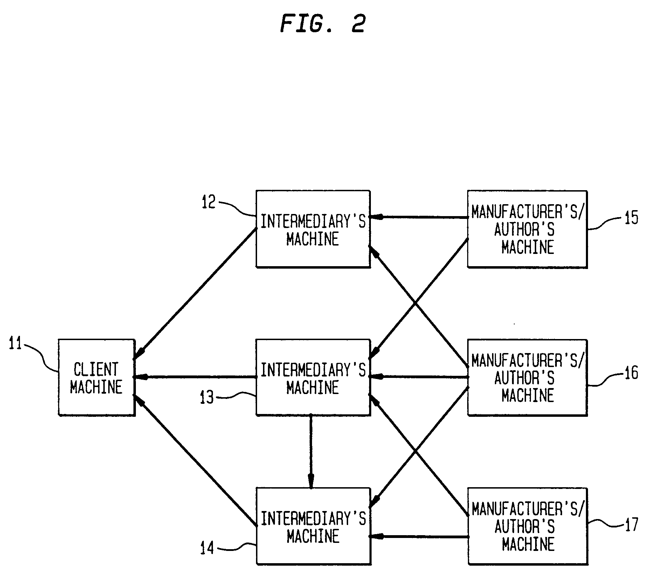

Figure 2 depicts an example of the content delivery mechanism. The content originates on a manufacturer's or an author's machine 15, 16, 17 and makes its way via a number of intermediary machines 12, 13, 14 before being downloaded to the client machine 11.

Figure 3 depicts the accumulation of credentials in the signed content as it is distributed from the manufacturer's machine 22 to the user's machine 20. The manufacturer adds its security credentials to the signed content 25 before sending it by some means 27 to an intermediary 21. The intermediary, in turn, adds its security credentials to the signed content 24, before sending it to the next intermediary in the distribution chain. In this manner, when the signed content finally arrives at the user, it contains a list of the security credentials of all the intermediaries and the manufacturer 23.

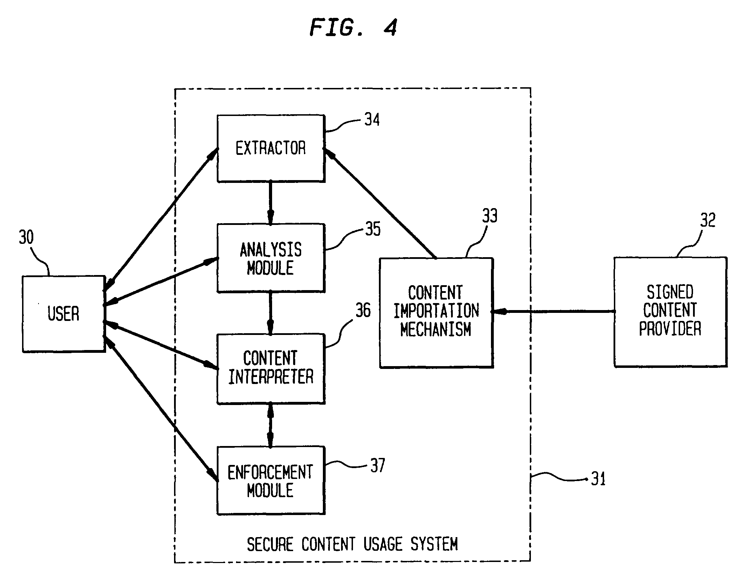

Figure 4 depicts the downloading of signed content from a content provider 32 and subsequent processing in a secure content usage system 31. The secure content usage system 31 can be embodied as part of a general purpose computing system (not shown), such as an IBM PC personal computer, an IBM RS/6000 workstation or any other workstation suitable for use as a client system. The signed content is downloaded by a content importation system 33. An extractor 34 parses the fields of the signature and passes this information to the analyzer module 35. The analyzer verifies the integrity of the content. It then examines the list of security credentials to determine the level of access and trust that the content should be used with on the machine. Next, it looks at the resource requirements of the content and determines, possibly with user input, if these requirements can be met. This information is then passed to the content interpreter 36 and the enforcement module 37.

The content importation mechanism 33 can be embodied, for example, as a network interface (e.g. which can couple a user to the Internet), a diskette subsystem, a CD ROM subsystem or a cartridge memory subsystem. The extractor 34, the analysis module 35, the content interpreter 36 and the enforcement module 37 can be embodied as program code executable by the workstation on which the secure content will be executed. The enforcement module is preferably coupled to the workstation's operating system (such as OS/2, UNIX or Windows NT). The content interpreter 36 can be embodied as a module within the operating system or it can be distinct from the operating system (such as a Java interpreter).

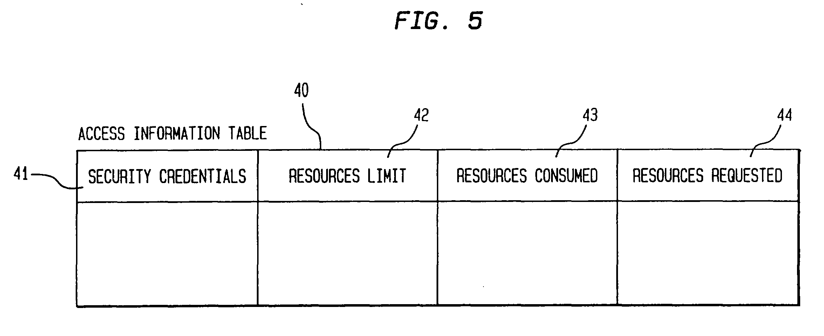

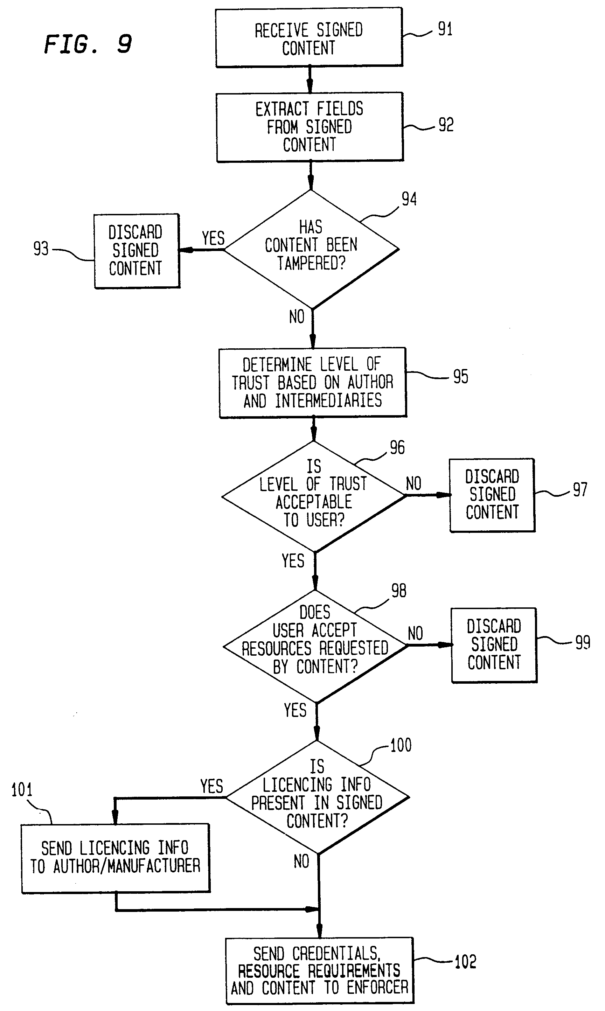

The flow chart corresponding to the operation of the system of Figure 4 is shown in Figure 9. The content interpreter is the mechanism to use the content. Examples of the content interpreter include internet browsers and the Java virtual machine. The enforcement module uses the level of trust determined by the analyzer to create entries in an access information table. This table is described in Figure 5.

Use of signed content typically requires access to operating system resources. Figure 5 depicts a table 40 that the enforcement module uses to keep track of the resources that have been requested and consumed by signed contents that are being used on its machine. The enforcement module uses the security credentials 41 on the signed content to determine the limit on the resources 42 that the signed content should be given on the client machine. This determination can be done in a variety of ways including preconfiguration by means of tables and requesting explicit user input to determine the access that the content should get. Effectively, the enforcement module manufactures a capability for the signed content that reflects "who gets how much access of what". Typically, the resources that a signed content gets are a subset of the resources that the user has access to on the client machine. The security manager keeps track of the resources that have been consumed 43 by the content. This is achieved by ensuring that all accesses to the system resources by the signed content pass through the security manager. The table also contains an entry for the resources that have been requested 43 by the signed content. If at any time, the resources consumed 43 exceed either the resource limit 42 or the resources requested 44, the security manager can take remedial action. Examples of remedial action include terminating the use of the signed content and asking the user for guidance on how to proceed.

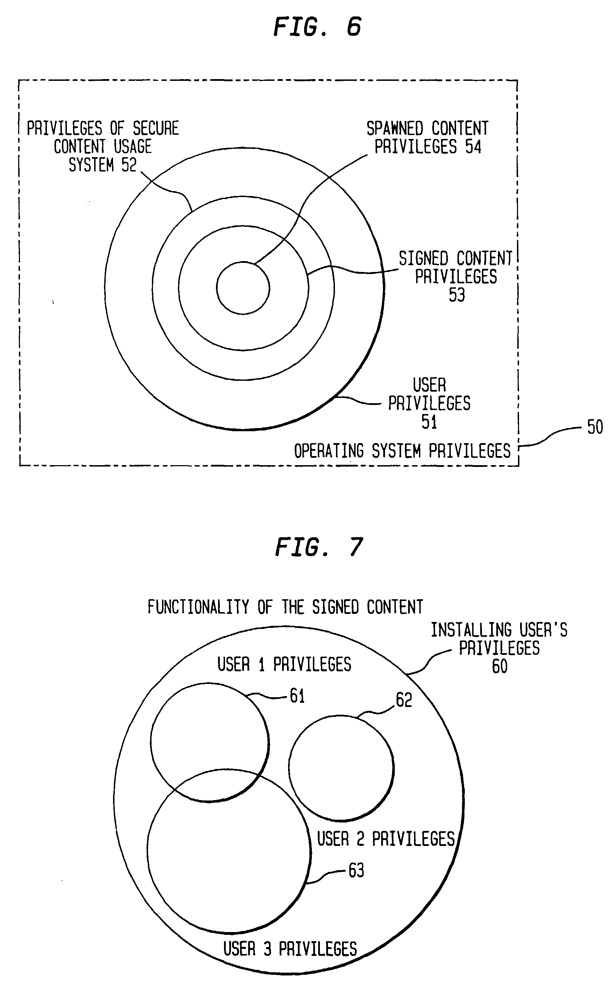

Figure 6 depicts the relationship between the capabilities of the various entities. The user's privileges 51 are a subset of the privileges of the operating system 50. The signed content is executed in an environment whose privileges 52 are a subset of the user's privileges. In turn, the privileges of the signed content 53 are a subset of its execution environment. The use of the signed content may cause the use of other content on the client machine. For instance, executing a Java applet may cause another executable to be instantiated into a process on the client machine. The privileges of such spawned content 54 are a subset of the privileges accorded to the signed content. Note that incorporating the resource requirements in the signature of a signed content provides the security manager with an effective mechanism for implementing these restrictions. The spawned content can be allowed to execute as long as the resources it consumes are a subset of the resource limits placed on the signed content. All this information can be tracked in the security manager table shown in Figure 5.

Once the signed content is downloaded onto the user's machine, the user gets a capability to use the content. This capability is associated with the user who initiated the transfer. The user can permit other users to use the signed content on his/her machine. Figure 7 shows the relationship between the privileges of other users such as 61, 62 and 63 and the privileges of the installing user 27. For instance, if the signed content was a Lotus document, then a user's privileges would reflect whether he could read, write or change the document.

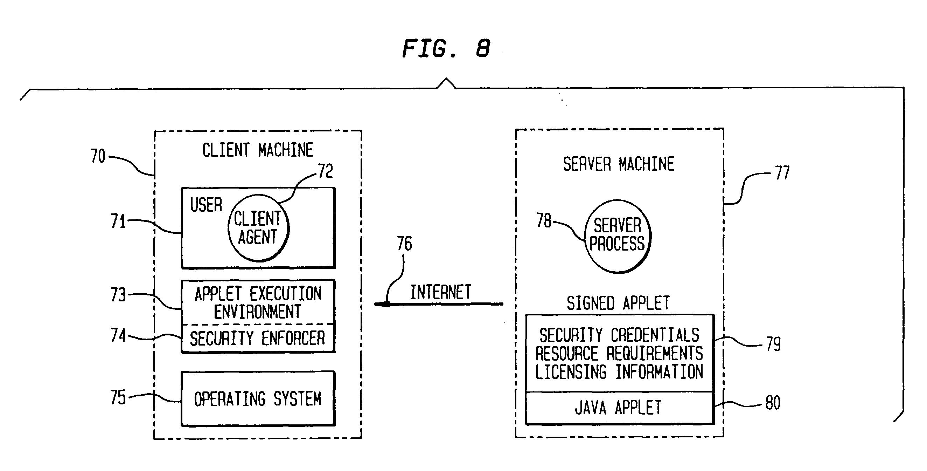

Figure 8 shows an embodiment where the signed content is a signed Java applet 80. The list of security credentials 79 on the applet are those of its author, the manufacturer and the retailer. The applet resides on a server machine 77 and is managed by a server process 78. Note that the server machine and server process are merely a distribution mechanism and they need not have any relation with the author. The content delivery mechanism is the Internet 76.

A client agent 72 acting on behalf of a user 71 and residing on a client machine 70 downloads the applet by contacting the server process. The client agent sends its security credentials, such as the identity of the user (such as its public key or certificate) and the identity of the client machine (such its IP address) to the server process. This information is used by the server process to authenticate the users and keep track of the usage of the applet. In response, the server process sends the signed applet, the identity of the server machine and the server process' public key (or certificate) back to the client. The server must encrypt its response with the public key of the user to ensure that the applet is securely conveyed to the client machine.

The client agent verifies the integrity of the content and the associated signature. Once this is done, the client agent determines the security credentials and the resource requirements of the signed content. It decrypts the server's response using its private key and extracts the security information in the response, that is, the identities of the creator (such as public key or certificate), the server process (such as public key or certificate) and the identity of the server machine (such as IP address). This information along with the name of the applet, the resource requirements stated in the signature and the identities of the user and the client machine are passed to the security enforcer 74. The security credentials of the signed applet are stored as a capability which consists of a triple consisting of the name of the signed content, the security credentials and the stated resource requirements are given to the security manager.

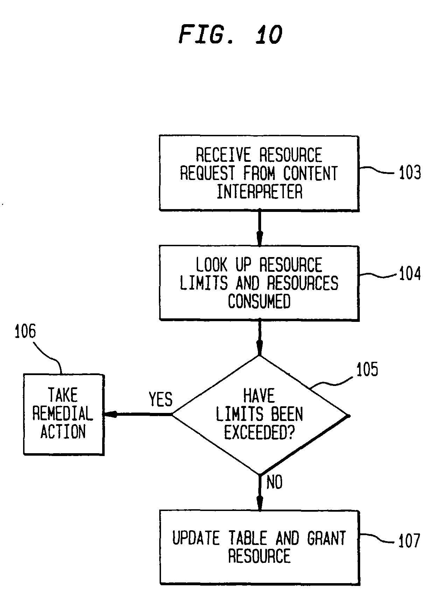

The security enforcer is akin to the security manager in the Java runtime environment. It is a trusted system service that cannot be changed. It uses security credentials of the signed content to compute the capabilities with which the applet can be executed on the client machine. When the signed content is set in execution, all calls to system resources are mediated through the security manager. The security manager uses the capability associated with the applet to determine if the resources requested by the applet should be granted (Figure 10). The manager can be used to program a range of security policies to determine the type of access that the signed applet has to the system resources. This can range from simple policies such as no access, complete access, access configured in advance by the user and access can be explicitly granted by promoting the user by means of dialog boxes.

The user who downloads the applet determines who else is allowed to access it. For each user a special capability is manufactured. When the content is it does so with a subset of the access rights of the invoker. At any time the security manager may revoke capabilities given to users of the applet.

Now that the invention has been described by way of the preferred embodiment, various modifications and improvements will occur to those of skill in the art. Thus, it should be understood that the preferred embodiment has been provided as an example and not as a limitation. The scope of the invention is defined by the appended claims.

In summary there is described a scheme for downloading signed content onto a machine by a delivery mechanism (such as floppy diskettes and the Internet) is described. While there are no restrictions on the nature of the contents, the signature on the content describes the security credentials of the creator, the resource requirements, and licensing information (such as the time period of its validity). Once the content has been downloaded, it can be used on the client machine in various ways. It can be installed on the client machine and there after users can execute it. Any use of the content of the content requires access to computing resources on the client machine. This access is mediated by means of a security manager that uses the information in the content's signature to manufacture capabilities that grant and regulate access to different subsets of the computing resources. In this sense, our scheme unifies work done in the previously disparate fields of network security and operating systems and results in data structures and algorithms that combine and manipulate elements of both.

## Claims

1. A secure content usage system for use in a computing system, comprising:
a content importation mechanism;
an extractor, operatively connected to receive signed content imported by way of the importation mechanism, for extracting portions of a signature from the signed content, the portions including a security credentials associated with the content;
resource requirements for using the content;
an analysis module for verifying authenticity and integrity of the signed content using at least the security credentials supplied by the extractor and taking remedial actions when any of the authenticity and the integrity are in doubt; and, an enforcement module for ensuring that use of the signed content conforms to the resource requirements and security credentials.

2. The system of Claim 1 wherein the extractor further includes one or both of:
i) means for extracting registration information from the signature and further comprising means for registering the signed content with a provider without further user intervention; and
ii) means for extracting licensing terms from the signature and wherein the enforcement module includes means for interacting with the operating system to ensure that the use conforms with the licensing terms.

3. The system of Claim 1 further including a data structure stored in a memory of the computing system, the data structure including a table of correspondence between users, the security credentials and features of the signed content, wherein the enforcement mechanisms is connected to read the table of correspondence from the data structure and includes means for enforcing use of the signed content by the users in accordance with the correspondence.

4. The system of Claim 1 wherein the enforcement module includes means for tracking processes spawned from the signed content and for ensuring operation of the processes conform to the resource requirements and security credentials.

5. The system of Claim 1 wherein the importation mechanism is one of:
i) a communication channel coupled to a communication network;
ii) rotating storage; or
iii) a removable memory card.

6. The system of any of Claims 1 to 5 further including a data structure stored in a memory of the computing system, the data structure including a table of correspondence between the signed content, the resource requirements, actual resources consumed by the signed content and any resource limits imposed on the signed content by the computing system.

7. The system of Claim 6 wherein the table further includes usage restrictions imposed on the signed content by the licensing terms.

8. A computer readable memory having signed content instatiated thereon, the signed content including a computer readable signature and computer readable content, the computer readable signature including a plurality of fields comprising a security credentials field including cryptographic identifies of at least an originator and intermediaries involved in a chain of distribution of the computer readable content and a resource requirements field identifying computing resources required for using the computer readable content.

9. A content usage system for use in a computing system, comprising:
a content importation mechanism;
an extractor, operatively connected to receive signed content imported by way of the importation mechanism, for extracting portions of a signature from the signed content, the portions including a computer readable licensing terms associated with the content; and
an enforcement module for controlling operation of the computing system so as to ensure that use of the signed content conforms to the licensing terms.

10. A method for ensuring secure usage of signed content in a computing system, comprising:
importing the signed content into the computing system;
extracting portions of a signature from the signed content, the portions including a security credentials associated with the content;
resource requirements for using the content;
verifying authenticity and integrity of the signed content using at least the security credentials and taking remedial actions when any of the authenticity and the integrity are in doubt; and
controlling an operating system of the computing system so as ensure that use of the signed content does not exceed the resource requirements and security credentials.

11. The method Claim 10 comprising one or both further steps of:
extracting registration information from the signature and registering the signed content with a provider by way of a communication channel without further user intervention; and
extracting licensing terms from the signature and controlling the operating system to ensure that the use of the signed content conforms with the licensing terms.

12. The method of Claim 10 or 11 comprising the further steps of forming a data structure in a memory of the computing system, the data structure including a table of correspondence between users, the security credentials and features of the signed content, and enforcing use of the signed content by the users in accordance with the correspondence.

13. The method of Claim 10, 11 or 12 comprising the further steps of tracking processes spawned from the signed content and constraining operation of the processes so as to conform to the resource requirements and security credentials.

14. The method of any of Claims 10 to 13 wherein the signed content includes at least one of an application program and a document.

15. A method of controlling content usage in a computing system, comprising the steps of:
importing contents into the computing system, the contents including computer readable licensing terms;
extracting the computer readable licensing terms from the imported contents; and
controlling operation of the computing system so as to ensure that use of the signed content conforms to the licensing terms.

16. The method of Claim 15 comprising the further steps of extracting registration information from the signature and automatically registering the signed content with a provider by way of a communication channel without further user intervention.
